(19) Europäisches Patentamt
European Patent Office
Office européen des brevets

(11) EP 1 732 390 B1

(12) EUROPEAN PATENT SPECIFICATION

(45) Date of publication and mention of the grant of the patent:
**01.01.2014 Bulletin 2014/01**

(21) Application number: **05716373.5**

(22) Date of filing: **24.03.2005**

(51) Int Cl.:
***A01N 47/12*** *(2006.01)* ***A01N 43/90*** *(2006.01)*
***A01P 13/00*** *(2006.01)*

(86) International application number:
**PCT/EP2005/003178**

(87) International publication number:
**WO 2005/092101 (06.10.2005 Gazette 2005/40)**

(54) **A HERBICIDAL COMBINATION**

EINE HERBIZIDE KOMBINATION

UNE ASSOCIATION HERBICIDE

(84) Designated Contracting States:
**AT BE BG CH CY CZ DE DK EE ES FI FR GB GR HU IE IS IT LI LT LU MC NL PL PT RO SE SI SK TR**

(30) Priority: **26.03.2004 EP 04007301**

(43) Date of publication of application:
**20.12.2006 Bulletin 2006/51**

(73) Proprietor: **Syngenta Participations AG**
**4058 Basel (CH)**

(72) Inventor: **KOTZIAN, Georg Rüdiger**
**4058 Basel (CH)**

(74) Representative: **Hölscher, Ingo et al**
**Syngenta International AG**
**Intellectual Property**
**WRO-1004-6-22**
**Schwarzwaldallee 215**
**4058 Basel (CH)**

(56) References cited:
**WO-A-96/19110** **WO-A-97/07678**
**WO-A-03/009684** **WO-A-03/028461**
**DE-A1- 4 209 475**

- **DATABASE WPI Section Ch, Week 200345 Derwent Publications Ltd., London, GB; Class C02, AN 2003-469234 XP002291188 & CN 1 398 517 A (XINYI ZHONGKAI AGRIC CHEM CO LTD JIANGSU) 26 February 2003 (2003-02-26)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 732 390 B1

## Description

The present invention relates to a method of controlling undesired vegetation in crops of useful plants, for example, monocotyledon crop plants, such as cereal crops, rice, corn, potatoes and sugar cane, by using a synergistic combination of compounds.

In crop protection products, it is desirable to increase the specific activity of an active ingredient and the reliability of action.

Surprisingly, it has now been found that a combination of variable amounts of at least two compounds (sometimes referred to as active ingredients) exhibits a synergistic action that is capable of controlling, either or both pre-emergence and post-emergence, the majority of undesired vegetation occurring especially in crops of useful plants without causing any appreciable damage to the useful plant.

The benefit of the invention, therefore, can be attained by allowing a composition comprising the combination of compounds to act on the undesired vegetation, or by allowing the individual compounds to act on the undesired vegetation, either by applying them simultaneously or in succession.

Herbicidal combinations of which comprise, as active ingredient, (A) at least one thiocarbamate compound; and (B) at least one compound with a mode of action of inhibition of acetolactate synthase are known in the art. For example, CN1398517 discloses combinations of butylate and nicosulfuron. WO 97/07678 discloses combinations of dimepiperate and azimsulfuron. WO 96/19110 discloses combinations of triallate/dimepiperate/molinate/thiobencarb/prosulfocarb and sulfosulfuron. WO 03/028461 discloses combinations of prosulfocarb/molinate and pyriftalid. WO 03/009684 discloses combinations of prosulfocarb and amidosulfuron. DE 42 09 475 discloses combinations of esprocarb/dimepiperate and phenoxysulfonylurea.

It has been found that (A) certain thiocarbamates and (B) certain compounds with a mode of action of inhibition of acetolactate synthase (ALS) are particularly effective in controlling undesired vegetation.

Accordingly, in a first aspect, the present invention provides a herbicidally synergistic composition for selective control of undesired vegetation which, in addition to comprising customary inert formulation adjuvants, comprises, preferably consists essentially of, as active ingredient, a combination of:

(A1) prosulfocarb and (B1) florasulam.

The compounds suitable for the combinations of the present invention are described in the e-Pesticide Manual, version 3.0, 13th Edition, Ed. CDC Tomlin, British Crop Protection Council, 2003-04.

In a second aspect, the present invention provides a method of controlling undesired vegetation in crops of useful plants, which comprises allowing a composition of the first aspect to act where control is desired, for example, on the undesired vegetation or the locus thereof.

In a third aspect, the present invention provides a method of controlling undesired vegetation in crops of useful plants, which comprises allowing a herbicidally synergistic effective amount of combination (A) and (B) as defined in the first aspect to act where control is desired, for example, on the undesired vegetation or the locus thereof, wherein the compounds are applied simultaneously or in succession in any order.

It is surprising that combinations of the specific compounds defined in the first aspect exceed that expected from additive action of the individual compounds used alone on the undesired vegetation and thus broaden the range of action of the compounds especially in two respects: firstly, the rates of application of the individual compounds are reduced while a good level of action is maintained and, secondly, the combinations according to the invention achieves a high level of undesired vegetation control also in those cases where the individual compounds, in the range of low rates of application, have become useless from the agronomic standpoint. Further, the result may be a considerable broadening of the spectrum of undesired vegetation controlled by the compounds. The combination according to the invention, while retaining excellent control of undesired vegetation in useful plants, also allows greater flexibility in succeeding crops.

The term "crops of useful plants" is to be understood as plants that have a value (*e.g.*, monetary value) to a grower and includes those, which have been made tolerant to compounds or classes of compounds as a result of conventional methods of breeding or genetic engineering. The term "plant" as used herein includes seedlings, bushes and trees. Undesired vegetation are those plants that affect the growth and quality of the useful plants and examples include grasses and weeds. A herbicidally effective amount of the combinations of the active ingredients are applied on appropriate areas for controlling the undesired vegetation to allow them to act on the undesired vegetation or the area of cultivation of the crop plants. Areas of cultivation are areas of land on which the crop plants are already growing or in which the seed material of those crop plants has been sown, and also land on which it is intended to grow those crop plants.

The control of the undesired vegetation ensures satisfactory crop yield and quality, and the grower of the crop has often to balance the costs associated with the use of compounds with the resulting yield, but generally an increase

of, for example, at least 5% yield of a crop which has undergone compound treatment compared with an untreated crop is considered control by the compound.

The combination according to the invention can be used against a large number of agronomically important undesired vegetation, such as grass weeds, *e.g., Alopecurus* species, *Poa-* species, *Apera-* species, *Avena* spp., *Lolium* -species, *Bromus*-species, *Echinochloa* spp., *Leptochloa* spp., *Digitaria* spp., *Phalaris* spp., *Setaria* spp., *Brachiaria* spp., and I*scheamum* spp.; broad-leaved weeds, such as *Gallium* spp., *Lamium* spp., *Geranium* spp. (*e.g.*, *Geranium rotundifolium*), *Solanum* spp., *Veronica* spp., *Viola* spp. (*e.g.*, *Viola tricolor*), *Alchemilla* spp., *Kochia* spp., *Stellaria* spp., *Polygonum* spp., *Matricaria* spp., *Chenocpodium* spp., *Aethusa cynapum*, *Amaranthus* spp., *Galinsoga* spp., *Monochoria* spp., *Lindernia* spp., *Anthemis* spp., *Sinapis* spp., *Raphanus* spp., *Papaver* spp., *Capsella* spp., *Rotala* spp., *Butomus* spp., *Limnocharis* spp., *Sphenoclea* spp., *Commelina* spp., *Ludwigia* spp., *Bidens pilosa, Elatine* spp., and *Kickxia* spp.; and the combination also controls annual and perennial sedges, *e.g.*, *Scirpus* spp. (*e..g.*, *Scirpus juncoides*), *Sagittaria* spp., *Cyperus* spp., *Eleocharis* spp. and *Fimbristylis* spp..

In particular, the each of the combinations according to the first aspect can be used against ALS-resistant weeds and ACCase-resistant weeds in crops of useful plants, for example in crops of rice, cereals and maize. Examples of ALS resistant weeds, for example in rice, are *Echinocloa gruss galli*, *Elatine triandria, Lindernia* spp., *Scirpus juncoides, Monochoria vaginalis, Monochoria korsakowaii;* and in cereals, are *Alopecurus myr.*, *Chenopodium album*, *Amaranthus* spp., *Raphanus raphanistrum, Sinapis* spp., *Kochia* spp.. Examples of Accase resistant weeds, for example in rice, are *Echinochloa crus-galli* and *Brachiaria* spp.; and in cereals, are Alopecurus myr., *Lolium* spp., *Avena* spp., *Apera* spp..

In the instance the combination (A1) and (B1) is used to control ALS-resistant weeds and ACCase-resistant weeds, (B1) preferably further comprises one or more of iodosulfuron, mesosulfuron, triasulfuron, flupyrsulfuron-methyl-sodium and 2-Methoxy-4-trifluoromethylpyridine-3-sulfonic acid (5,7-dimethoxy-[1,2,4]triazolo[1,5-a]pyrimidin-2-yl)-amide.

The combination according to the invention is suitable for all methods of application conventionally used in agriculture, *e.g.*, pre-emergence application, and post-emergence application. The combination according to the invention is suitable especially for controlling undesired vegetation in crops of useful plants, such as monocotyledon crops, for example:

- cereal crops - where examples of undesired vegetation include *Alopecurus* species, *Poa*species, *Apera*- species, *Avena* spp., *Lolium* -species, *Bromus*-species, *Phalaris* spp., *Gallium* spp., *Geranium* spp. (*e.g.*, *Geranium* rotundifolium), *Veronica* spp., *Viola* spp. (*e.g.*, *Viola tricolor*), *Lamium* spp., *Stellaria* spp., *Polygonum* spp., *Aethusa cynapum*, *Alchemilla* spp., *Kochia* spp., *Matricaria* spp., *Anthemis* spp., *Chenocpodium* spp. and *Kickxia* spp.;

- rice crops - where examples of undesired vegetation include *Echinochloa* spp., *Leptochloa* spp. *Digitaria* spp. *Setaria* spp. *Brachiaria* spp., and *Ischeamum* spp., *Monochoria* spp., *Lindernia* spp., *Ludwigia* spp., *Elatine* spp., *Scirpus* spp. (*e.g.*, *Scirpus juncoides*), *Cyperus* spp., *Eleocharis* spp. *Butomus* spp., *Rotala* spp., *Commelina* spp., *Limnocharis* spp., *Sphenoclea* spp., *Sagittaria* spp., *Bidens pilosa,* and *Fimbristylis* spp.;

- corn - where examples of undesired vegetation include *Echinochloa* spp., *Digitaria* spp., *Setaria* spp., *Cyperus* spp., *Kochia* spp., *Matricaria* spp., *Chenocpodium* ppp., *Solanum* spp., *Polygonum* spp., *Amaranthus* spp., and *Galinsoga* spp.; and

- sugar cane - where examples of undesired vegetation include *Echinochloa* spp., *Digitaria* spp., *Setaria* spp., *Brachiaria* spp., *Kochia* spp. and *Amarathus* spp..

The combination is especially preferred for controlling undesired vegetation in graminaceous crops.

In an embodiment of each aspect of the present invention, one or more compounds of formulae S-I to S-X below are used in combination with the active ingredients of the present invention. Compounds of formulae S-I to S-X are suitable for the protection of useful plants against the phytotoxic action of a certain herbicides (e.g., flucarbazone-sodium, propoxycarbazone-sodium, and flupyrsulfuron-methyl-sodium).

A compound of formula S-I:

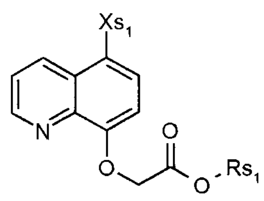

(S-1)

wherein

$Xs_1$ is hydrogen or halogen and
$Rs_1$ is hydrogen, $C_3$-$C_8$alkenyl, $C_3$-$C_8$alkynyl, $C_3$-$C_8$cycloalkyl, $C_1$-$C_8$alkyl, or $C_1$-$C_8$alkoxy- or $C_3$-$C_8$alkenyloxy-substituted $C_1$-$C_8$alkyl, or
$Rs_1$ is a cation selected from the group of the alkali and alkaline earth metals, iron, copper, aluminium, ammonium, quaternary ammonium, sulfonium and phosphonium, such cations being described e.g. in WO 02/034048;
a compound of formula S-II:

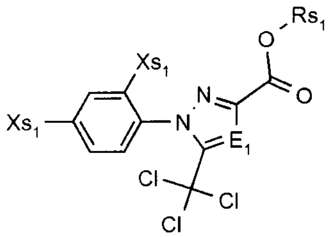

(S-II)

wherein $E_1$ is nitrogen or methine, the substituents $Xs_1$ are each independently of the other hydrogen or halogen, and $Rs_1$ is hydrogen, $C_3$-$C_8$alkenyl, $C_3$-$C_8$alkynyl, $C_3$-$C_8$cycloalkyl, $C_1$-$C_8$alkyl, or $C_1$-$C_8$alkoxy- or $C_3$-$C_8$alkenyloxy-substituted $C_1$-$C_8$alkyl, or $Rs_1$ is a cation selected from the group of the alkali and alkaline earth metals, iron, copper, aluminium, ammonium, quaternary ammonium, sulfonium and phosphonium:

a compound of formula S-III:

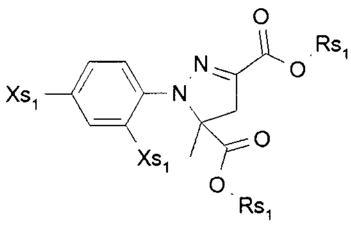

(S-III)

wherein the substituents $Xs_1$ are each independently of the other hydrogen or halogen, and the substituents $Rs_1$ are each independently of the other hydrogen, $C_3$-$C_8$alkenyl, $C_3$-$C_8$alkynyl, $C_3$-$C_8$cycloalkyl, $C_1$-$C_8$alkyl, or $C_1$-$C_8$alkoxy- or $C_3$-$C_8$alkenyloxy-substituted $C_1$-$C_8$alkyl, or the substituents $Rs_1$ are a cation selected from the group of the alkali and alkaline earth metals, iron, copper, aluminium, ammonium, quaternary ammonium, sulfonium and phosphonium;

a compound of formula S-IV:

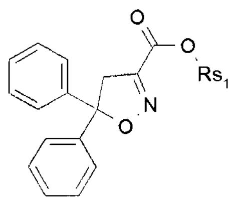

(S-IV)

wherein $Rs_1$ is hydrogen, $C_3$-$C_8$alkenyl, $C_3$-$C_8$alkynyl, $C_3$-$C_8$cycloalkyl, $C_1$-$C_8$alkyl, or $C_1$-$C_8$alkoxy- or $C_3$-$C_8$alkenyloxy-substituted $C_1$-$C_8$alkyl, or $Rs_1$ is a cation selected from the group of the alkali and alkaline earth metals, iron, copper, aluminium, ammonium, quaternary ammonium, sulfonium and phosphonium;

a compound of formula S-V:

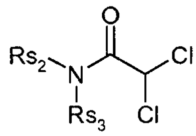 (S-V)

wherein $Rs_2$ and $Rs_3$ are each independently of the other $C_1$-$C_8$alkyl, $C_2$-$C_8$alkenyl or $C_3$-$C_8$-cycloalkyl, or $Rs_2$ and $Rs_3$ together form a radical of formula

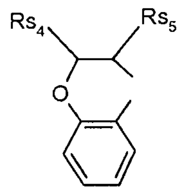

wherein $Rs_4$ and $Rs_5$ are each independently of the other hydrogen or $C_1$-$C_8$alkyl, or $Rs_2$ and $Rs_3$ together form a radical of formula

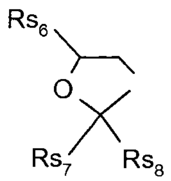 ,

wherein $Rs_7$ and $Rs_8$ are each independently of the other $C_1$-$C_6$alkyl, or $Rs_7$ and $Rs_8$ together form $-(CH_2)_5-$, and $Rs_6$ is hydrogen, $C_1$-$C_6$alkyl, aryl or heteroaryl;

a compound of formula S-VI:

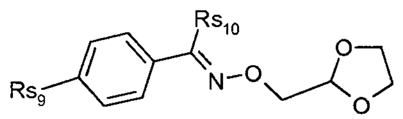 (S-VI)

wherein $Rs_9$ is hydrogen or halogen and $Rs_{10}$ is cyano or trifluoromethyl;

a compound of formula S-VII:

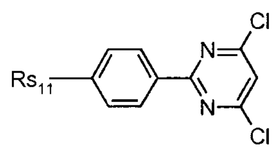 (S-VII)

wherein $Rs_{11}$ is hydrogen or methyl;

a compound of formula S-VIII:

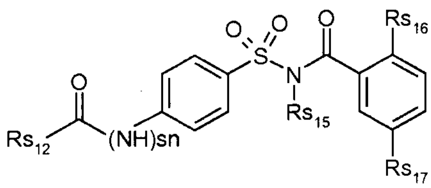 (S-VIII)

wherein sn is 0 or 1,
$Rs_{12}$ is hydrogen, $C_1$-$C_8$alkyl, $C_3$-$C_8$cycloalkyl, $C_3$-$C_8$alkenyl, $C_3$-$C_8$alkynyl or -N(-$Rs_{13}$-$Rs_{14}$), wherein $Rs_{13}$ and $Rs_{14}$ are each independently of the other hydrogen, $C_1$-$C_8$alkyl, $C_3$-$C_8$cycloalkyl, $C_3$-$C_8$alkenyl or $C_3$-$C_8$alkynyl, or $Rs_{13}$ and $Rs_{14}$ together form a $C_4$-$C_6$alkylene group which may be interrupted by oxygen, sulfur, SO, $SO_2$, NH or by N($C_1$-$C_4$alkyl);
$Rs_{15}$ is hydrogen or a cation selected from the group of the alkali and alkaline earth metals, iron, copper, aluminium, ammonium, quaternary ammonium, sulfonium and phosphonium, $Rs_{16}$ is hydrogen, halogen, $C_1$-$C_8$alkyl or methoxy and
$Rs_{17}$ is hydrogen, halogen, $C_1$-$C_8$alkyl, trifluoromethyl or $C_1$-$C_8$alkoxy;

a compound of formula S-IX:

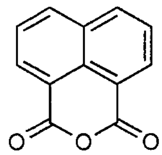

(S-IX)

a compound of formula S-X:

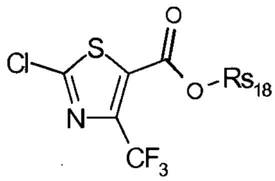

(S-X)

wherein $Rs_{18}$ is benzyl, hydrogen, $C_3$-$C_8$alkenyl, $C_3$-$C_8$alkynyl, $C_3$-$C_8$cycloalkyl, $C_1$-$C_8$alkyl, or $C_1$-$C_8$alkoxy- or $C_3$-$C_8$alkenyloxy-substituted $C_1$-$C_8$alkyl, or $Rs_{18}$ is a cation selected from the group of the alkali and alkaline earth metals, iron, copper, aluminium, ammonium, quaternary ammonium, sulfonium and phosphonium.

The safeners of formulae S-I to S-X are known and are described e.g. in US-A-5,041,157, US-A-5,541,148, US-A-5,006,656, EP-A-0 094 349, EP-A-0 551 650, EP-A-0 268 554, EP-A-0 375 061, EP-A-0 174 562, EP-A-492 366, WO 91/7874, WO 94/987, DE-A-196 12 943, WO 96/29870, WO 98/13361, WO 98/39297, WO 98/27049, EP-A-0 716 073, EP-A-0 613 618, US-A-5,597,776, EP-A-0 430 004, WO 97/45016, WO 99/16744 and WO 03/02205.

Preferred safeners correspond to formula S-I.1

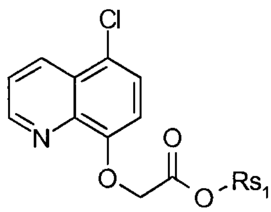

(S-I.1)

wherein $Rs_1$ is hydrogen, $C_3$-$C_8$cycloalkyl, $C_1$-$C_8$alkyl, or $C_1$-$C_8$alkoxy- or $C_3$-$C_8$alkenyloxysubstituted $C_1$-$C_8$alkyl, or $Rs_1$ is a cation selected from the group of the alkali and alkaline earth metals, iron, copper, aluminium, ammonium, quaternary ammonium, sulfonium and phosphonium,

formula S-II.1

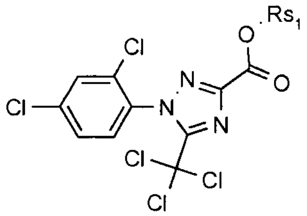 (S-II.1)

wherein $Rs_1$ is $C_1$-$C_8$alkyl, or $C_3$-$C_8$alkenyloxy-substituted $C_1$-$C_8$alkyl,

formula S-III.1

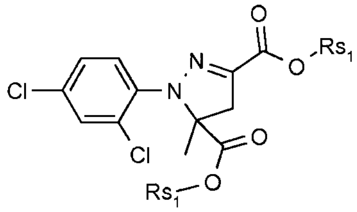 (S-III.1)

wherein the substituents $Rs_1$ are each independently of the other $C_1$-$C_8$alkyl, or $C_3$-$C_8$alkenyloxy-substituted $C_1$-$C_8$alkyl,

formula S-IV.1

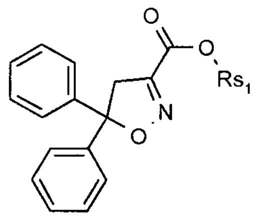 (S-IV.1)

wherein $Rs_1$ is $C_1$-$C_8$alkyl, or $C_3$-$C_8$alkenyloxy-substituted $C_1$-$C_8$alkyl,

formula S-V.1

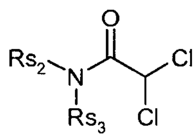 (S-V.1)

wherein $Rs_2$ and $Rs_3$ are each independently of the other $C_2$-$C_8$alkenyl, or $Rs_2$ and $Rs_3$ together form a radical of formula

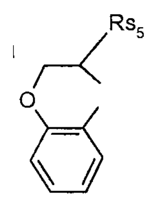 ,

wherein $Rs_5$ is hydrogen or $C_1$-$C_4$alkyl, or $Rs_2$ and $Rs_3$ together form a radical of formula

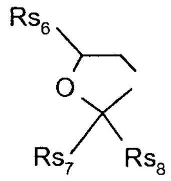

,

wherein $Rs_7$ and $Rs_8$ are each independently of the other $C_1$-$C_4$alkyl, or $Rs_7$ and $Rs_8$ together form $-(CH_2)_5-$, and $Rs_6$ is hydrogen, $C_1$-$C_4$alkyl or

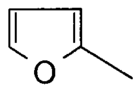

,

formula S-VI.1

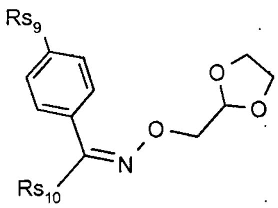

S-VI.1

wherein $Rs_9$ is hydrogen or chlorine and $Rs_{10}$ is cyano or trifluoromethyl,

formula S-VII.1

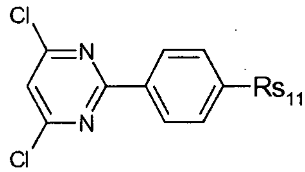

(S-VII.1)

wherein $Rs_{11}$ is hydrogen or methyl,

formula S-VIII.1

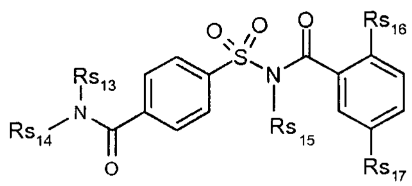

(S-VIII.1)

wherein $Rs_{13}$ and $Rs_{14}$ are each independently of the other hydrogen, $C_1$-$C_4$alkyl, $C_3$-$C_6$cycloalkyl, $C_3$-$C_6$alkenyl or $C_3$-$C_6$alkynyl, or $Rs_{13}$ and $Rs_{14}$ together form a $C_4$-$C_6$-alkylene group, $Rs_{15}$ is hydrogen or a cation selected from the group of the alkali and alkaline earth metals, iron, copper, aluminium, ammonium, quaternary ammonium, sulfonium and phosphonium, $Rs_{16}$ is hydrogen, $C_1$-$C_6$alkyl or methoxy and $Rs_{17}$ is hydrogen, $C_1$-$C_6$alkyl or $C_1$-$C_6$alkoxy,

formula S-IX.1

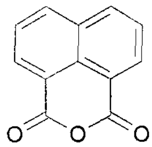

(S-IX.1)

and formula S-X.1

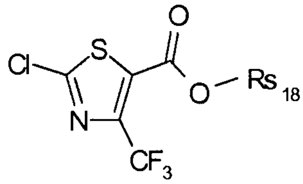

(S-X.1)

wherein $Rs_{18}$ is benzyl, $C_1$-$C_8$alkyl, or $C_3$-$C_8$alkenyloxy-substituted $C_1$-$C_8$alkyl.

Especially preferred safeners of formula S-I.1 are cloquintocet-mexyl (CAS RN 99607-70-2) or sulfonium and phosphonium salts thereof, such as are known from WO 02/34048, of formula S-II.1 fenchlorazole-ethyl (CAS RN 103112-35-2, and CAS RN 103112-36-3 for the corresponding acid), of formula S-III.1 mefenpyr-diethyl (CAS RN 135590-91-9, and CAS RN 135591-00-3 for the corresponding di-acid), of formula S-IV.1 isoxadifen-ethyl (CAS RN 163520-33-0, and CAS RN 209866-92-2 for the corresponding acid), of formula S-V.1 furilazole (CAS RN 121776-33-8, and CAS RN 121776-57-6 for the corresponding R isomer), benoxacor (CAS RN 98730-04-2) and dichlormid (CAS RN 37764-25-3), of formula S-VI.1 oxabetrinil (CAS RN 74782-23-3) and cyometrinil (CAS RN 78370-21-5, and CAS RN 63278-33-1 for the corresponding (Z) isomer), of formula S-VII.1 fenclorim (CAS RN 3740-92-9), of formula S-VIII.1 N-cyclopropyl-4-(2-methoxy-benzoylsulfamoyl)-benzamide (CAS RN 221667-31-8) and N-isopropyl-4-(2-methoxy-benzoylsulfamoyl)-benzamide (CAS RN 221668-34-4), of formula S-IX.1 naphthalic anhydride (CAS RN 81-84-5) and of formula S-X.1 flurazole (CAS RN 72850-64-7).

The amount of compounds (A) and (B) used in the combination according to the present invention is such that a herbicidal and synergistic activity is demonstrated and is generally in any effective mixing ratio, but usually an excess of compound (A) is present over compound (B). In an embodiment, the weight ratio of compound (A) to compound (B) is in the range of from 1000:1 to 10:1, preferably 700:1 to 20:1, especially 450:1 to 50:1.

The combination according to the invention is suitable for all methods of application conventionally used in agriculture, *e.g.*, pre-emergence application, and post-emergence application.

The rate of application may vary within wide limits and depends on the nature of the soil, the method of application (pre- or post-emergence, *etc.*), the crop plant, the undesired vegetation to be controlled, the prevailing climatic conditions, and other factors governed by the method of application, the time of application and the target crop. The active ingredient mixture according to the invention can generally be applied at a rate of from 0.01 to 10, preferably 0.1 to 7, especially 1 to 5, kg per ha. In the event the compounds are applied separately, the total amount applied is the same with the individual compounds applied on the basis of the mixing mentioned above.

Whether the combination according to the invention is used as a composition comprising compounds (A) and (B) or used as individual compounds either simultaneously or in succession, the compounds may be employed in unmodified form, i.e., as obtained in synthesis, but are generally used in a formulation, formulated together with the adjuvants conventionally used in formulation technology, such as solvents, solid carriers or surfactants, for example, into emulsifiable concentrates, directly sprayable or dilutable solutions, wettable powders, soluble powders, dusts, granules or microcapsules, as described in WO 97/34483, pages 9 to 13. As with the nature of the formulation, the methods of application, such as spraying, atomising, dusting, wetting, scattering or pouring, are chosen in accordance with the intended objectives and the prevailing circumstances. The formulations can be prepared in a known manner, *e.g.*, by intimately mixing and/or grinding the active ingredients with the formulation adjuvants, *e.g.*, solvents or solid carriers. In addition, surface-active compounds (surfactants) may also be used in the preparation of the formulations.

Examples of solvents and solid carriers are given, for example, in WO 97/34485, page 6. Depending on the nature of the active ingredients to be formulated, suitable surface-active compounds are non-ionic, cationic and/or anionic surfactants and surfactant mixtures having good emulsifying, dispersing and wetting properties. Examples of suitable anionic, non-ionic and cationic surfactants are listed, for example, in WO 97/34485, pages 7 and 8. Also suitable for the preparation of the herbicidal compositions according to the invention are the surfactants conventionally employed in formulation technology, which are described, *inter alia*, in "McCutcheon's Detergents and Emulsifiers Annual" MC Publishing Corp., Ridgewood New Jersey, 1981, Stache, H., "Tensid-Taschenbuch", Carl Hanser Verlag, Munich/Vienna, 1981 and M. and J. Ash, "Encyclopedia of Surfactants", Vol I-III, Chemical Publishing Co., New York, 1980-81.

The herbicidal formulations usually contain from 0.1 to 99 % by weight, especially from 0.1 to 95 % by weight, of active ingredient, from 0 to 25 % by weight, especially from 0.1 to 25 % by weight, of a surfactant, and the balance a solid or liquid formulation adjuvant.

Whereas commercial products are usually formulated as concentrates, the end user will normally employ dilute formulations. The compositions may also comprise further ingredients, such as stabilisers, *e.g.*, vegetable oils or epoxidised vegetable oils (epoxidised coconut oil, rapeseed oil or soybean oil), antifoams, *e.g.*, silicone oil, preservatives, viscosity regulators, binders, tackifiers and also fertilisers or other active ingredients.

Preferred formulations have especially the following compositions:
(% = percent by weight)

| | |
|---|---|
| Emulsifiable concentrates: | |
| active ingredient mixture: | 1 to 90 %, preferably 5 to 20 % |
| surfactant: | 1 to 30 %, preferably 10 to 20 % |
| liquid carrier: | balance |
| Dusts: | |
| active ingredient mixture: | 0.1 to 10 %, preferably 0.1 to 5 % |
| solid carrier: | 99.9 to 90 %, preferably 99.9 to 95 % |
| Suspension concentrates: | |
| active ingredient mixture: | 5 to 75 %, preferably 10 to 50 % |
| water: | 94 to 24 %, preferably 88 to 30 % |
| surfactant: | balance |
| Wettable powders: | |
| active ingredient mixture: | 0.5 to 90 %, preferably 1 to 80 % |
| surfactant: | 0.5 to 20 %, preferably 1 to 15 % |
| solid carrier: | balance |
| Granules: | |
| active ingredient mixture: | 0.1 to 30 %, preferably 0.5 to 15 % |
| solid carrier: | 99.9 to 70 %, preferably 99.5 to 85 % |

Examples are specific formulations include:

| F1. Emulsifiable concentrates | a) | b) | c) | d) |
|---|---|---|---|---|
| active ingredient mixture | 5% | 10% | 25 % | 50% |
| calcium dodecylbenzenesulfonate | 6% | 8% | 6 % | 8% |
| castor oil polyglycol ether (36 mol of ethylene oxide) | 4% | - | 4 % | 4% |
| octylphenol polyglycol ether (7-8 mol of ethylene oxide) | - | 4% | - | 2% |
| cyclohexanone | - | - | 10 % | 20 % |
| arom. hydrocarbon mixture $C_9$-$C_{12}$ | 85 % | 78 % | 55 % | 16% |

Emulsions of any desired concentration can be obtained from such concentrates by dilution with water.

| F2. Solutions | a) | b) | c) | d) |
|---|---|---|---|---|
| active ingredient mixture | 5 % | 10 % | 50 % | 90 % |
| 1-methoxy-3-(3-methoxy-propoxy)-propane | - | 20 % | 20 % | - |
| polyethylene glycol MW 400 | 20 % | 10 % | - | - |
| N-methyl-2-pyrrolidone | - | - | 30 % | 10 % |
| arom. hydrocarbon mixture $C_9$-$C_{12}$ | 75 % | 60 % | - | - |

The solutions are suitable for use in the form of microdrops.

| F3. Wettable powders | a) | b) | c) | d) |
|---|---|---|---|---|
| active ingredient mixture | 5 % | 25 % | 50 % | 80 % |
| sodium lignosulfonate | 4 % | - | 3 % | - |
| sodium lauryl sulfate | 2 % | 3 % | - | 4 % |
| sodium diisobutylnaphthalene-sulfonate | - | 6 % | 5 % | 6 % |
| octylphenol polyglycol ether (7-8 mol of ethylene oxide) | - | 1 % | 2 % | - |
| highly dispersed silicic acid | 1 % | 3 % | 5 % | 10 % |
| kaolin | 88 % | 62 % | 35 % | - |

The active ingredient is mixed thoroughly with the adjuvants and the mixture is thoroughly ground in a suitable mill, affording wettable powders which can be diluted with water to give suspensions of any desired concentration.

| F4. Coated granules | a) | b) | c) |
|---|---|---|---|
| active ingredient mixture | 0.1 % | 5 % | 15 % |
| highly dispersed silicic acid | 0.9 % | 2 % | 2 % |
| inorganic carrier (diameter 0.1 - 1 mm) *e.g.*, $CaCO_3$ or $SiO_2$ | 99.0 % | 93 % | 83 % |

The active ingredient is dissolved in methylene chloride and applied to the carrier by spraying, and the solvent is then evaporated off *in vacuo*.

| F5. Coated granules | a) | b) | c) |
|---|---|---|---|
| active ingredient mixture | 0.1 % | 5 % | 15 % |
| polyethylene glycol MW 200 | 1.0 % | 2 % | 3 % |
| highly dispersed silicic acid | 0.9 % | 1 % | 2 % |
| inorganic carrier (diameter 0.1 - 1 mm) *e.g.*, $CaCO_3$ or $SiO_2$ | 98.0 % | 92 % | 80 % |

The finely ground active ingredient is uniformly applied, in a mixer, to the carrier moistened with polyethylene glycol. Non-dusty coated granules are obtained in this manner.

| F6. Extruder granules | a) | b) | c) | d) |
|---|---|---|---|---|
| active ingredient mixture | 0.1 % | 3 % | 5 % | 15 % |
| sodium lignosulfonate | 1.5 % | 2 % | 3 % | 4 % |
| carboxymethylcellulose | 1.4 % | 2 % | 2 % | 2 % |
| kaolin | 97.0 % | 93 % | 90 % | 79 % |

The active ingredient is mixed and ground with the adjuvants, and the mixture is moistened with water. The mixture is extruded and then dried in a stream of air.

| F7. Dusts | a) | b) | c) |
|---|---|---|---|
| active ingredient mixture | 0.1 % | 1 % | 5 % |
| talcum | 39.9 % | 49 % | 35 % |
| kaolin | 60.0 % | 50 % | 60 % |

Ready-to-use dusts are obtained by mixing the active ingredient with the carriers and grinding the mixture in a suitable mill.

| F8. Suspension concentrates | a) | b) | c) | d) |
|---|---|---|---|---|
| active ingredient mixture | 3 % | 10 % | 25 % | 50% |
| ethylene glycol | 5 % | 5 % | 5% | 5% |
| nonylphenol polyglycol ether (15 mol of ethylene oxide) | - | 1 % | 2% | |

(continued)

| F8. Suspension concentrates | a) | b) | c) | d) |
|---|---|---|---|---|
| sodium lignosulfonate | 3 % | 3 % | 4% | 5% |
| carboxymethylcellulose | 1 % | 1 % | 1 % | 1 % |
| 37 % aqueous formaldehyde % solution | 0.2 % | 0.2 % | 0.2 % | 0.2 |
| silicone oil emulsion | 0.8 % | 0.8 % | 0.8 % | 0.8 % |
| water | 87 % | 79 % | 62 % | 38 % |

The finely ground active ingredient is intimately mixed with the adjuvants, giving a suspension concentrate from which suspensions of any desired concentration can be obtained by dilution with water.

It is often more practical for the active ingredients of the combinations according to the invention to be formulated separately and to be brought together in the desired mixing ratio in the applicator in the form of a "tank mixture" in water shortly before application.

Accordingly, the composition according to the first aspect includes formulations of any nature (*e.g.*, emulsifiable concentrate, suspension concentrates, wettable powders) and can be prepared as a specific formulation of compounds (A) and (B) or prepared from the individual formulated compounds in a container, *e.g.*, tank mixture.

The application of the compounds on the area where control is desired or the locus thereof in third aspect of the invention can be achieved by applying the compounds (A) and (B) defined in the first aspect, generally after dilution, by, for example, spray or broadcast methods.

The time elapse between application of each compound to the area where control is desired should be such that both compounds are able to act synergistically on the undesired vegetation. The order of the compounds, in the event the application of the compounds is in succession, is not critical, although preferred is compound (A) followed by compound (B). The second compound is applied within preferably 2, more preferably 1, especially 0.5, days of the first compound.

The following Examples are given by way of illustration and not by way of limitation of the invention.

<u>Biological Examples</u>

The herbicidal action to be expected *We* for a given combination of two compounds (A) and (B) can be calculated according to the Colby formula (see COLBY, S.R., "Calculating synergistic and antagonistic response of compound combinations", Weeds 15, pages 20-22, 1967):

$$We = X + \left[ Y \bullet (100 - X) / 100 \right]$$

wherein:

X = percentage herbicidal action on treatment with compound (A) at a rate of application of p kg per hectare, compared with the untreated control (= 0 %).

Y = percentage herbicidal action on treatment with compound (B) at a rate of application of q kg per hectare, compared with the untreated control.

Thus, if the observed activity is greater than that the expected from the Colby formula, then synergism is present.

The field tests are carried out on actual farmer fields and set up as complete randomized block with 3 replicates. All treatments are applied at early post emergence at 1-2 leaves of weeds. The products are diluted in a 300 l/ha water volume and are sprayed by air-pressured knapsack sprayer with a 2 m spray boom over the top of already emerged crops and weeds. The plots are evaluated after 5-10 days after application for crop tolerance and from 30 to 40 days for biological activity on undesired vegetation (weeds). The rating scale used is 100 % action = plant is completely dead; 0 % action = no phytotoxic action.

Table B1: Post-emergence herbicidal action of the composition according to the invention comprising prosulfocarb and florasulam at 39 days after application:

| | Rate of application (g/ha) | % damage to viola tricolor | Expected value according to Colby |
|---|---|---|---|
| A: Prosulfocarb | 3200 | 20 | - |
| B: florasulam | 50 | 5 | - |
| A+B | 3200 + 50 | 47 | 24 |

Table B2: Post-emergence herbicidal action of the composition according to the invention comprising prosulfocarb and florasulam at 36 days after application:

| | Rate of application (g/ha) | % damage to alchemilla sp. | Expected value according to Colby |
|---|---|---|---|
| A: Prosulfocarb | 3200 | 0 | - |
| B: florasulam | 50 | 63 | - |
| A+B | 3200 + 50 | 81 | 63 |

The data show that the application of certain a thiocarbamate compound and a certain compound with a mode of action by inhibition of acetolactate synthase (ALS) demonstrates synergistic herbicidal activity.

Table B1: Post-emergence herbicidal action of the composition according to the invention comprising prosulfocarb and flupyrsulfuron-methyl-sodium at 39 days after application:

| | Rate of application (g/ha) | % damage to geranium rotundifolium | Expected value according to Colby |
|---|---|---|---|
| A: Prosulfocarb | 3200 | 0 | - |
| B: flupyrsulfuronmethyl-sodium | 7.5 | 90 | - |
| A+B | 3200 + 7.5 | 95 | 90 |

Table B2: Post-emergence herbicidal action of the composition according to the invention comprising prosulfocarb and flupyrsulfuron-methyl-sodium at 39 days after application:

| | Rate of application (g/ha) | % damage to veronica hederifolia | Expected value according to Colby |
|---|---|---|---|
| A1: Prosulfocarb | 3200 | 33 | - |
| A2: Prosulfocarb | 2400 | 30 | |
| B: flupyrsulfuronmethyl-sodium | 7.5 | 20 | - |
| A1 + B | 3200 + 7.5 | 85 | 46 |
| A2+B | 2400 + 7.5 | 77 | 44 |

Table B3: Post-emergence herbicidal action of the composition according to the invention comprising prosulfocarb and flupyrsulfuron-methyl-sodium at 39 days after application (39 DAA):

| | Rate of application (g/ha) | % damage to viola tricolor | Expected value according to Colby |
|---|---|---|---|
| A1: Prosulfocarb | 3200 | 20 | - |
| A2: Prosulfocarb | 2400 | 20 | |
| B: flupyrsulfuronmethyl-sodium | 7.5 | 20 | - |
| A1 + B | 3200 + 7.5 | 58 | 36 |

(continued)

| | Rate of application (g/ha) | % damage to viola tricolor | Expected value according to Colby |
|---|---|---|---|
| A2+B | 2400 + 7.5 | 62 | 36 |

Table B4: Post-emergence herbicidal action of the composition according to the invention comprising prosulfocarb and flupyrsulfuron-methyl-sodium at 36 days after application:

| | Rate of application (g/ha) | % damage to alchemilla sp. | Expected value according to Colby |
|---|---|---|---|
| A1: Prosulfocarb | 3200 | 0 | - |
| A2: Prosulfocarb | 2400 | 0 | |
| B: flupyrsulfuronmethyl-sodium | 7.5 | 50 | - |
| A1 + B | 3200 + 7.5 | 66 | 50 |
| A2 + B | 2400 + 7.5 | 65 | 50 |

Table B5: Post-emergence herbicidal action of the composition according to the invention comprising prosulfocarb and flupyrsulfuron-methyl-sodium at 36 days after application:

| | Rate of application (g/ha) | % damage to kickxia sp. | Expected value according to Colby |
|---|---|---|---|
| A1: Prosulfocarb | 3200 | 0 | - |
| A2: Prosulfocarb | 2400 | 0 | |
| B: flupyrsulfuronmethyl-sodium | 7.5 | 53 | - |
| A1 + B | 3200 + 7.5 | 66 | 53 |
| A2+B | 2400 + 7.5 | 60 | 53 |

Table B6: Post-emergence herbicidal action of the composition according to the invention comprising prosulfocarb and flupyrsulfuron-methyl-sodium at 39 days after application:

| | Rate of application (g/ha) | % damage to galium aparine | Expected value according to Colby |
|---|---|---|---|
| A: Prosulfocarb | 2400 | 91 | - |
| B: flupyrsulfuronmethyl-sodium | 7.5 | 60 | - |
| A+B | 2400 + 7.5 | 99 | 96 |

Table B7: Post-emergence herbicidal action of the composition according to the invention comprising prosulfocarb and florasulam at 39 days after application:

| | Rate of application (g/ha) | % damage to viola tricolor | Expected value according to Colby |
|---|---|---|---|
| A: Prosulfocarb | 3200 | 20 | - |
| B: florasulam | 50 | 5 | - |
| A+B | 3200 + 50 | 47 | 24 |

Table B8: Post-emergence herbicidal action of the composition according to the invention comprising prosulfocarb and florasulam at 36 days after application:

| | Rate of application (g/ha) | % damage to alchemilla sp. | Expected value according to Colby |
|---|---|---|---|
| A: Prosulfocarb | 3200 | 0 | - |
| B: florasulam | 50 | 63 | - |
| A+B | 3200 + 50 | 81 | 63 |

The data show that the application of certain a thiocarbamate compound and a certain compound with a mode of action by inhibition of acetolactate synthase (ALS) demonstrates synergistic herbicidal activity.

## Claims

1. A herbicidally synergistic composition which, in addition to comprising customary inert formulation adjuvants, comprises a combination of the active ingredients (A1) prosulfocarb and (B1) florasulam.

2. The composition according to claim 1 wherein combination (A1) and (B1) further comprises one or more of flupyrsulfuron-methyl-sodium, pyriftalid and amidosulfuron.

3. A method of controlling undesired vegetation in crops of useful plants, which comprises allowing a composition defined in either claim 1 or claim 2 to act where control is desired.

4. A method of controlling undesired vegetation in crops of useful plants according to claim 3, which comprises allowing a herbicidally synergistic effective amount of combination (A) and (B) as defined in either claim 1 or claim 2 to act where control is desired, wherein the compounds are applied simultaneously or in succession in any order.

5. The method according to either claim 3 or claim 4, wherein the undesired vegetation is selected from *Alopecurus* species, *Poa-* species, *Apera-* species, *Avena* spp., *Lolium* -species, *Bromus*-species, *Echinochloa* spp., *Leptochloa* spp., *Digitaria* spp., *Phalaris* spp., *Setaria* spp., *Brachiaria* spp., *Ischeamum* spp., *Gallium* spp., *Lamium* spp., *Geranium* spp., *Solanum* spp., *Veronica* spp., *Viola* spp., *Alchemilla* spp., *Kochia* spp., *Stellaria* spp., *Polygonum* spp., *Matricaria* spp., *Chenocpodium* ppp., *Aethusa cynapum, Amaranthus* spp., *Galinsoga* spp., *Monochoria* spp., *Lindernia* spp., *Sinapis* spp., *Raphanus* spp., *Papaver* spp., *Capsella* spp., *Anthemis* spp., *Rotala* spp., *Butomus* spp., *Limnocharis* spp., *Sphenoclea* spp., *Commelina* spp., *Ludwigia* spp., *Bidens pilosa, Elatine* spp., *Kickxia* spp., *Scirpus* spp., *Sagittaria* spp., *Cyperus* spp., *Eleocharis* spp. and *Fimbristylis* spp..

6. The method according to any of claims 3 to 5, wherein the crop plant is a cereal.

7. The method according to any one of claims 3 to 6 wherein the undesired vegetation is an ACCase-resistant weed or an ALS-resistant weed.

8. The method according claim 7, wherein the undesired vegetation is an ACCase-resistant weed or an ALS-resistant weed and in the combination (A1) and (B1), (B1) further comprises one or more of iodosulfuron, mesosulfuron, triasulfuron, flupyrsulfuron-methyl-sodium and 2-Methoxy-4-trifluoromethyl-pyridine-3-sulfonic acid (5,7-dimethoxy-[1,2,4]triazolo[1,5-a]pyrimidin-2-yl)-amide.

## Patentansprüche

1. Herbizid-synergistische Zusammensetzung, die zusätzlich zu traditionellen inerten Formulierungshilfsmitteln eine Kombination der Wirkstoffe (A1) Prosulfocarb und (B1) Florasulam umfasst.

2. Zusammensetzung nach Anspruch 1, wobei die Kombination (A1) und (B1) weiterhin ein oder mehr Mitglieder aus der Gruppe Flupyrsulfuron-methyl-Natrium, Pyriftalid und Amidosulfuron umfasst.

3. Verfahren zum Bekämpfen von unerwünschtem Pflanzenwuchs in Kulturen von Nutzpflanzen, bei dem man eine

in entweder Anspruch 1 oder Anspruch 2 definierte Zusammensetzung dort einwirken lässt, wo bekämpft werden soll.

**4.** Verfahren zum Bekämpfen von unerwünschtem Pflanzenwuchs in Kulturen von Nutzpflanzen nach Anspruch 3, bei dem eine herbizidsynergistische wirksame Menge einer wie in entweder Anspruch 1 oder Anspruch 2 definierten Kombination (A) und (B) dort einwirken lässt, wo bekämpft werden soll, wobei die Verbindungen gleichzeitig oder nacheinander in einer beliebigen Reihenfolge ausgebracht werden.

**5.** Verfahren nach entweder Anspruch 3 oder Anspruch 4, wobei der unerwünschte Pflanzenwuchs aus der Reihe *Alopecurus*-Arten, Poa-Arten, *Apera*-Arten, *Avena* spp., *Lolium*-Arten, *Bromus-Arten, Echinochloa* spp., *Leptochloa* spp., *Digitaria* spp., *Phalaris* spp., *Setaria* spp., *Brachiaria* spp., *Ischeamum* spp., *Gallium* spp., *Lamium* spp., *Geranium* spp., *Solanum* spp., *Veronica* spp., *Viola* spp., *Alchemilla* spp., *Kochia* spp., *Stellaria* spp., *Polygonum* spp., *Matricaria* spp., *Chenopodium* spp., *Aethusa cynapum, Amaranthus* spp., *Galinsoga* spp., *Monochoria* spp., *Lindernia* spp., *Sinapis* spp., *Raphanus* spp., *Papaver* spp., *Capsella* spp., *Anthemis* spp., *Rotala* spp., *Butomus* spp., *Limnocharis* spp., *Sphenoclea* spp., *Commelina* spp., *Ludwigia* spp., *Bidens pilosa, Elatine* spp., *Kickxia* spp., *Scirpus* spp., *Sagittaria* spp., *Cyperus* spp., *Eleocharis* spp. und *Fimbristylis* spp. ausgewählt ist.

**6.** Verfahren nach einem der Ansprüche 3 bis 5, wobei es sich bei der Kulturpflanze um ein Getreide handelt.

**7.** Verfahren nach einem der Ansprüche 3 bis 6, wobei es sich bei dem unerwünschten Pflanzenwuchs um ein ACCase-resistentes Unkraut oder ein ALS-resistentes Unkraut handelt.

**8.** Verfahren nach Anspruch 7, wobei es sich bei dem unerwünschten Pflanzenwuchs um ein ACCase-resistentes Unkraut oder ein ALS-resistentes Unkraut handelt und (B1) in der Kombination (A1) und (B1) weiterhin einen oder mehrere Wirkstoffe aus der Gruppe Iodosulfuron, Mesosulfuron, Triasulfuron, Flupyrsulfuron-methyl-Natrium und 2-Methoxy-4-trifluormethylpyridin-3-sulfonsäure-(5,7-dimethoxy-[1,2,4]triazol[1,5-a]pyridin-2-yl) amid umfasst.

## Revendications

**1.** Composition herbicide synergique qui, en plus de comprendre des adjuvants de formulation inertes usuels, comprend une combinaison des substances actives (A1) prosulfocarbe et (B1) florasulame.

**2.** Composition selon la revendication 1 dans laquelle la combinaison de (A1) et (B1) comprend en outre l'un ou plusieurs de flupyrsulfuron-méthyl-sodium, pyriftalid et amidosulfuron.

**3.** Procédé de contrôle de la végétation indésirable dans des cultures de plantes utiles, qui comprend l'étape consistant à laisser une composition définie dans la revendication 1 ou la revendication 2 agir où le contrôle est souhaité.

**4.** Procédé de contrôle de la végétation indésirable dans des cultures de plantes utiles selon la revendication 3, qui comprend l'étape consistant à laisser une quantité efficace d'herbicide synergique de combinaison de (A) et (B) telle que définie dans la revendication 1 ou la revendication 2 agir où le contrôle est souhaité, dans lequel les composés sont appliqués simultanément ou successivement dans un ordre quelconque.

**5.** Procédé selon la revendication 3 ou la revendication 4, dans lequel la végétation indésirable est choisie parmi les espèces *Alopecurus,* les espèces Poa, les espèces *Apera, Avena* spp., les espèces *Lolium,* les espèces *Bromus, Echinochloa* spp., *Leptochloa* spp., *Digitaria* spp., *Phalaris* spp., *Setaria* spp., *Brachiaria* spp., *Ischeamum* spp., *Gallium* spp., *Lamium* spp., *Geranium* spp., *Solanum* spp., *Veronica* spp., *Viola* spp., *Alchemilla* spp., *Kochia* spp., *Stellaria* spp., *Polygonum* spp., *Matricaria* spp., *Chenopodium* ppp., *Aethusa cynapum, Amaranthus* spp., *Galinsoga* spp., *Monochoria* spp., *Lindernia* spp., *Sinapis* spp., *Raphanus* spp., *Papaver* spp., *Capsella* spp., *Anthemis* spp., *Rotala* spp., *Butomus* spp., *Limnocharis* spp., *Sphenoclea* spp., *Commelina* spp., *Ludwigia* spp., *Bidens pilosa, Elatine* spp., *Kickxia* spp., *Scirpus* spp., *Sagittaria* spp., *Cyperus* spp., *Eleocharis* spp. *et Fimbristylis* spp..

**6.** Procédé selon l'une quelconque des revendications 3 à 5, dans lequel la plante cultivée est une céréale.

**7.** Procédé selon l'une quelconque des revendications 3 à 6 dans lequel la végétation indésirable est une mauvaise herbe résistante à ACCase ou une mauvaise herbe résistante à ALS.

**8.** Procédé selon la revendication 7, dans lequel la végétation indésirable est une mauvaise herbe résistante à ACCase

ou une mauvaise herbe résistante à ALS et dans la combinaison de (A1) et (B1), (B1) comprend en outre l'un ou plusieurs d'iodosulfuron, mésosulfuron, triasulfuron, flupyrsulfuron-méthyl-sodium et le (5,7-diméthoxy-[1,2,4]triazolo[1,5-a]pyrimidin-2-yl)-amide d'acide 2-méthoxy-4-trifluorométhyl-pyridine-3-sulfonique.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 1398517
- WO 9707678 A
- WO 9619110 A
- WO 03028461 A
- WO 03009684 A
- DE 4209475
- WO 02034048 A
- US 5041157 A
- US 5541148 A
- US 5006656 A
- EP 0094349 A
- EP 0551650 A
- EP 0268554 A
- EP 0375061 A
- EP 0174562 A
- EP 492366 A
- WO 917874 A
- WO 94987 A
- DE 19612943 A
- WO 9629870 A
- WO 9813361 A
- WO 9839297 A
- WO 9827049 A
- EP 0716073 A
- EP 0613618 A
- US 5597776 A
- EP 0430004 A
- WO 9745016 A
- WO 9916744 A
- WO 0302205 A
- WO 0234048 A
- WO 9734483 A
- WO 9734485 A


### Non-patent literature cited in the description


- e-Pesticide Manual. British Crop Protection Council, 2003
- McCutcheon's Detergents and Emulsifiers Annual. MC Publishing Corp, 1981
- **STACHE, H.** Tensid-Taschenbuch. Carl Hanser Verlag, 1981
- **MUNICH/VIENNA ; M. AND J. ASH.** Encyclopedia of Surfactants. Chemical Publishing Co, 1980, vol. I-III
- **COLBY, S.R.** Calculating synergistic and antagonistic response of compound combinations. *Weeds,* 1967, vol. 15, 20-22